# EUROPEAN PATENT APPLICATION

(11) **EP 1 037 133 A1**
(43) Date of publication of application: **20.09.2000**
(21) Application number: 99104028.8
(22) Date of filing: 15.03.1999
(51) Int. Cl.: G06F 1/30, G06F 9/445, G06F 9/46

(54) **Method and apparatus for alternation between instances of operating systems in computer systems**

(71) Applicant: International Business Machines Corporation, Armonk, N.Y. 10504 (US)
(72) Inventor: Hermann, Reto, 8863 Buttikon (CH); Husemann, Dirk, 8134 Adliswil (CH)
(74) Representative: Heusch, Christian

(57) **Abstract**

Information processing system 50 which comprises a processor 51, a volatile memory 53 and a non-volatile memory 55 and which supports a hibernation/dehibernation function by which the state of an operating instance, including the state of the processor 51, is saved in the non-volatile memory 55 for later retrieval. The hibernation/dehibernation function allows the state of two independent operating instances and the respective states of the processor 51 to be saved in the non-volatile memory 55 for later retrieval.

## Description

### TECHNICAL FIELD

The invention concerns computer systems with a hibernation/dehibernation function.

### BACKGROUND OF THE INVENTION

The disk storage capacity of computer systems has been increasing over the past years. This does also apply for fixed disk drives used in Personal Computers (PC) and portable PCs. The fixed disk drives are currently approaching capacities of 10 GBytes. Given these enormous storage capacities it has become possible to maintain multiple operating systems (OS), including versions of the same OS, on a single fixed disk drive of a computer system. Such systems are commonly referred to as multi-boot systems. Nowadays, switching from one running OS instance to another requires that the respective computer system be shut-down and re-booted with the other OS. Shut-down of a computer system is time-consuming and requires that all applications be terminated whereby the application contexts usually are lost. Re-booting an OS is time-consuming as well, because those applications that a user usually works with need to be restarted. As a consequence, frequent switching between instances of OSs by shut-down/re-boot is inconvenient and, hence, impractical.

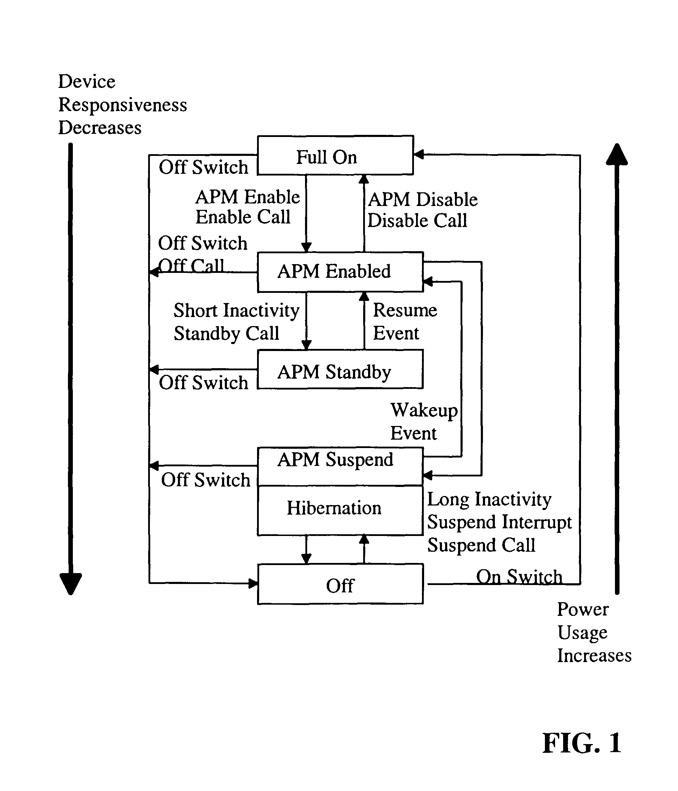

Many computer systems now offer a so-called hibernation feature which has been described in the art as part of an industry standard called Advanced Power Management (APM). Details of APM are given in the document "Intel, Microsoft, Advanced Power Management (APM) -- BIOS Interface Specification", Revision 1.2, February 1996, which is incorporated in its entirety. APM involves all levels of a computer system, including hardware, basic input/output system (BIOS), device drivers, OS, and applications. The principal technique used to reduce power consumption is to shut-off entire parts of a computing system that are temporarily not used or to reduce clock rates of the processors. APM differentiates a number of system states: the full-on state, the APM-enabled state, the APM-standby state, the APM-suspend state, and the off state. The APM-suspend state is the most power-preserving mode. Only very little power is consumed to maintain some switch circuitry via which a wakeup operation can be invoked to return to the APM-enabled state and from there to the full-on state. Details of APM and the various states are illustrated in Figure 1. The hibernation state is a special variant of the APM-suspend state in which all operational parameters are saved to a hibernation image in non-volatile memory prior to putting the system to off state. Typically, the hibernation image is saved to a file, called hibernation file, in the hard-disk drive. Then the power is cut off from all parts of the computer system but the above mentioned circuitry. When leaving the hibernation state, the hibernation image must be read from non-volatile memory to return to the APM-suspend state and from there via wakeup to the full-on state where the original computer state is restored. The switching into and out off the hibernation state is under user control via the switching circuitry.

Several approaches related to APM are described in US patents, including "Method for saving and restoring the state of a CPU executing code in protected mode including estimating the value of the page table base register", US Patent 5,577,220, 19 November 1996, and "Suspend-to-disk system for removable hard drive", US Patent 5,680,540, 21 October 1997. US Patent 5,577,220 solves the problem of saving and restoring the state of a CPU (central processing unit) executing code in protected mode, and US Patent 5,680,540 solves the problem of letting the user suspend-to-disk, remove the fixed disk drive from the computer, insert it into another computer and resume-from-disk on this other computer.

Beginning of 1999, VMWare, Incorporated announced a product called VMware virtual platform which lets a user run multiple OSs on a computer (VMware is a trademark of VMware, Incorporated). The VMware product sits on top of a host OS, e.g. Linux (Linux is a trademark of Linus Torvald), and allows the user to install and run other OSes (guest OSes) from there. VMware provides multiple virtual machines that can run the different guest OSes. The host OS and guest OSes run concurrently. It is a disadvantage that if the host OS crashes, all the other guest OSes crash, too. Details of VMware are given in the leaflets "VMware for LINUX - Detailed Specifications" and "VMware for Windows NT - Detailed Specifications", published by VMware, Incorporated, 1999 (Windows is a trademark of Microsoft Corporation). A patent seems to be pending for the underlying technology.

It is an object of the present invention to provide a computer system which allows to easily switch from one running OS instance to another OS instance.

It is an object of the present invention to provide a method for switching from one OS instance that runs on a computer system to another OS instance.

It is an object of the present invention to provide software which controls a computer systems such that one can switch from one running OS instance to another OS instance.

### SUMMARY OF THE INVENTION

The present invention concerns information processing systems which comprise a processor (e.g., a CPU), a volatile memory and a non-volatile memory and which support a function - such as a hibernation/dehibernation function - by which the state of an OS instance is saved in the non-volatile memory for later retrieval. The state of the OS instance comprises the state of the processor. The present function allows the state of alternate OS instances and the respective states of the processor to be saved in the non-volatile memory for later retrieval.

The present invention furthermore concerns information processing systems which comprise a processor, a volatile memory and a non-volatile memory and which support a function - such as a hibernation/dehibernation function - by which the state of an OS instance together with the state of the processor is saved in the non-volatile memory for later retrieval. These information processing systems comprise means, operative when entering a suspend state, for saving the state of said OS in said non-volatile memory, means, operative when entering or leaving a suspend state, for selecting an alternate OS instance, the state of which is stored in said non-volatile memory, and means for reestablishing the state of said alternate OS instance and the corresponding state of the processor.

The present invention also concerns information processing systems which comprise a processor, a volatile memory and a non-volatile memory and which support a function - such as a hibernation/dehibernation function - by which the state of an OS instance is saved in the non-volatile memory for later retrieval. The state of the processor is stored together with the state of the OS instance. These information processing systems comprise, when operated, multiple hibernation images in the non-volatile memory. Each hibernation image comprises state information required for reestablishing the respective OS instance and the corresponding processor states.

This present invention solves the annoying problem of the time-consuming shut-down/re-boot procedure that computer system users running multiple operating systems - or at least two versions of the same OS - on the same computer system have to go through when they want to switch from one OS, or version to the other.

A technical advantage achieved by the present invention is that it enables a user to suspend the presently running instance of an OS and boot an instance of an alternate OS (or an alternate instance of the same OS) without having to shut-down the present instance.

A further technical advantage achieved with the present invention is that it enables a user to switch from the presently running instance of an OS to an instance of an alternate OS (or an alternate instance of the same OS) that has previously been suspended without having to shut-down the present instance.

Combined, these technical advantages enable the user to switch between instances of OSs efficiently and thereby preserving the application contexts.

The present invention allows a user or organization to achieve new levels of flexibility, productivity, and performance, while maximizing the return on their investment in hard-and software.

Users can use a single machine to write and test software for multiple OSs. One can also upgrade to a more recent version of an OS without having to remove an older version.

### DESCRIPTION OF THE DRAWINGS

The invention is described in detail below with reference to the following schematic drawings. It is to be noted that the Figures are not drawn to scale.
- **FIG. 1**: is an APM state diagram which illustrates APM system state transitions.
- **FIG. 2**: is a schematic state diagram of a computer with a conventional suspend/resume function.
- **FIG. 3**: is a schematic state diagram of a computer system in accordance with the present invention.
- **FIG. 4**: is a schematic state diagram of another computer system in accordance with the present invention.
- **FIG. 5**: is a schematic state block diagram of a computer system in accordance with the present invention.
- **FIG. 6**: is a schematic representation of a hibernation file as used in connection with the present invention.
- **FIG. 7**: is a schematic flow diagram illustrating a sequence of steps in accordance with the present invention.
- **FIG. 8A**: is a schematic flow diagram illustrating another sequence of steps in accordance with the present invention.
- **FIG. 8B**: is a schematic flow diagram illustrating another sequence of steps in accordance with the present invention.

### DESCRIPTION OF PREFERRED EMBODIMENTS:

The terms "computer system" or "information processing system" are herein used to describe any programmable machine or apparatus which is capable of accepting and processing data and producing results by carrying out repetitious and complex binary operations. Examples of such systems are: personal computers (PCs), servers, mainframes, notebooks computers, palmtops, laptops, personal digital assistants (PDAs). Further examples of computer systems are communication devices (routers, brouters, bridges, switches, hubs, etc), certain household appliances, games, central processing units of cars, certain audio/video equipment, consumer products, etc.

The term "operating system (OS) instance" is used as a synonym for an operational operating system, no matter for which computer system and/or platform is was designed, as well as any part, portion, or module of such operating systems. Operating system in the present context means a collection of instructions, in any language, code or notation, intended to cause a computer system to perform particular functions either directly or after either or both of the following a) conversion to another language, code or notation; b) reproduction in a different material form.

The terms "state of a computer system" or "state of an operating instance" might either refer to the state of a volatile memory, or the state of a processor (e.g., a CPU), or the state of the volatile memory and the state of a processor, or the state of the computer system. Note that the state of a processor can be stored by saving the contents of the respective registers.

Before addressing the present invention, the basics of a typical computer system are described below. In order to make the description concrete, we describe PC computing systems and follow the terminology and describe conventions as used for PCs. For other than PC computing systems, analogous components and features exist.

A computer system as herein addressed typically has the following major components:
1. CPU (central processing unit) is the computing component in a computer system. It is the portion of the computer system that performs computations, executes instructions, controls to a certain degree the transfers of information between parts of the computer system. A computer system might contain one single-chip central processing unit (microprocessor), or several microprocessors.
2. Main memory (also called random access memory (RAM)): This is where data and instructions are held while awaiting actions by the processor. A RAM is volatile which means that once the power is turned off, its contents are lost. Data stored in the main memory is accessed far more quickly than that kept on mass storage devices such as hard disk drives, compact disk read-only memories (CD ROMs), and digital versatile disks (DVDs). Some computer systems also have a cache memory. This cache memory is a storage space which is smaller than the main RAM and where the most frequently accessed data is kept. Memory chips used in cache are usually faster and more expensive than memory chips used in the main memory (RAM).
   There are two basic types of RAM - static RAM (SRAM) and dynamic RAM (DRAM). SRAM is more stable but is more expensive and requires more power than DRAM. It is generally only found in cache memory. DRAM is slower, less stable, requires less power, and is cheaper than SRAM. DRAM typically has an access time of around 60 nanoseconds while SRAM is accessed in about 10 nanoseconds. As well, the cycle time for SRAM is shorter than that for DRAM.
3. Buses, controller(s), and interface(s) (herein referred to as bus structure): This is the internal circuitry that moves data and instructions around and facilitates the communication with the CPU, memory, and each other. Buses form the data pathways, controllers control where and when data and instructions move, and interfaces allow different components to communicate with each other. A bus is basically a collection of wires and/or fibers (and probably some chips) inside the computer system through which data is transmitted from one part of the computer to another and to and from peripheral devices. Today's PCs, for example, have at least four buses, which interconnect all the components. Note that the bus widths and speeds are approximate and may vary.
   - Processor Bus - The main path connecting to the computer system's main processor (CPU).
   - Cache Bus - Dedicated access to the system cache, found only on some high end computers.
   - Memory Bus - Connects the computer system's memory to the processor (CPU).
   - Local I/O Bus - The main bus, which connects high-speed peripherals to the computer system, e.g. video card and hard disks. The standard today is the PCI bus (Peripheral Component Interconnect Local bus), the other local bus is the VLB (VESA Local Bus). These buses are "local" because they have a direct connection to the processor (CPU).
   - Standard I/O Bus - Connects slower peripheral to the other buses. This bus still mostly uses the original ISA bus type from the original IBM computers (XT and AT) although other standards such as PCI or USB are emerging. It connects peripherals such as mice, keyboards, modems, and low-end sound cards.
   Note that peripherals connect to the I/O buses in various ways, primarily through connectors directly on the motherboard and through different interfaces such as expansion cards.
4. Input devices and output devices: An input device is anything that sends data to the computer system. For example, mice, keyboards, scanners, digital cameras, modems, etc. An output device is anything that produces output from a computer system. For example, monitors, printers, modems. Note that several devices are both input and output devices, e.g. hard disk drives, modems, etc.

One could also list mass storage devices as a fifth component. In the present context, however, the mass storage devices are assumed to be input and/or output devices. Examples of mass storage devices are: hard disk drives, CD ROM drives, DVDs, and other like devices.

Before addressing the present invention, the basics of a boot process are described below. In order to make the description concrete, we give it in the exemplary context of a PC computing system and follow the terminology and describe conventions as used for PCs. For other than PC computing systems, analogous boot processes do exist to which the techniques of this invention described later could be easily applied by somebody skilled in the art.

When the power supply of a PC is turned on, the PC's chip set generates a reset signal to the processor until the power supply signals a stable supply voltage. Next the processor looks in a predefined (BIOS) ROM memory location (normally at address FFFF0h) for the start of the (BIOS) boot program. Usually, this is just a "jump" instruction indicating to the processor the beginning of the actual (BIOS) startup program. The (BIOS) startup program then performs the power-on self-test and initializes other devices by running their ROM's (BIOS) startup code. Eventually, the (BIOS) startup program begins the search for the boot medium, usually a disk drive, according to the specified boot sequence setting, from which to boot the OS. When the boot medium is a disk drive, the boot process continues as follows: The (BIOS) startup program loads the master boot record (MBR) from the found primary "active" partition, which contains the master partition table and the master boot code. The MBR is normally located at cylinder 0, head 0, sector 1 of the disk drive. The (BIOS) startup program relinquishes control by executing the master boot code, a tiny program that itself eventually transfers control to the boot loader stored in the partition used to boot the OS. In the situation of a multi-boot system, where a computing system is used to run multiple OSs, the boot loader often resides on a special partition that is marked "active" and called the "boot manager partition". The boot loader, then called "boot manager", analyzes all primary partitions and presents the user with a choice of available OSs to boot. After the selection, the boot manager branches to the proper partition, marks this partition as "active" and continues with the boot process from there.

Now that the computer system is up and running and the OS is loaded, the system is ready to run application software. This requires the coordinated interaction of numerous components (identified above) in the computer system. The CPU handles the incoming data and instructions, performs necessary computations and sends data and instruction to RAM and peripheral devices. If one needs to access data on a storage device (hard-disk drive, CD ROM, floppy, DVD, etc.) the CPU asks the respective device to send the necessary data and instructions to RAM. This is necessary since the CPU can only manipulate data that is held in the main memory (RAM). Usually, every program which is executed and every file which is accessed is copied from a storage device into the main memory. Note that sometimes only parts of the programs/files are loaded - a mechanism called paging in Unix systems (UNIX is a trademark of UNIX System Laboratories, Inc.). Whereas the active data (e.g. data of an application program which is currently in use) is stored in RAM, the most frequently accessed portions of that data are stored in the cache memory, if available. The CPU communicates with the main memory (RAM), cache memory, and peripheral devices (input and output, I/O) through the respective bus. A controller or several controllers handle the transfer of data back and forth between the various components along the bus. The bus connects to various components through interfaces of which there usually are numerous types. An interface may be an expansion card inside the computer system with an external plug-in port, it may be housed within a peripheral device, or it may be located directly inside the computer system. Some of the peripherals are internal such as hard-disk drives, CD ROMs, modems, sound cards, video cards, etc. and some are external like the mouse, keyboard, monitor, scanner, printer, etc.

If on a multi-boot system one now wants to use another OS instance instead of the OS instance which is running at the moment on the computer system, a conventional computer systems has to be shut down. Then, the system can be re-booted with the other OS instance by making the respective selection in the boot manager menu. The shut-down and re-boot process is very time consuming. In addition, all running programs have to be terminated as well.

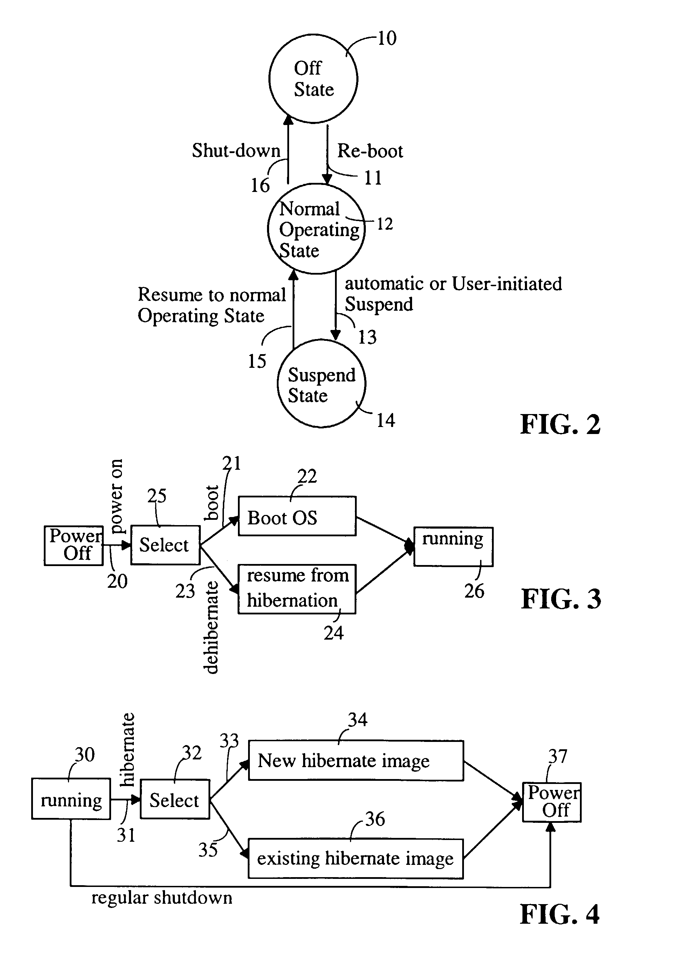

In the sequel, the term normal operating state shall refer to the full-on state as mentioned at the beginning of the present document and the term suspend state shall refer to the special implementation of the APM-suspend state where the state of the computer system has been saved by storing all its operational parameters to non-volatile memory, as mentioned at the beginning of the present document. To date, usually a hard-disk drive is used as non-volatile memory for storing the state of the computer system. Details of US Patent 5,577,220, mentioned in the introductory part of the present document, are incorporated by reference. Before addressing the present invention, three different states of a known computer system, as derived from the one described in US Patent 5,577,220, are addressed. These three states are illustrated in the state diagram of Figure 2. Note that only those states of a known computer system are discussed which are relevant in the present context. Additional details and aspects are well known to someone skilled in the art. The three states are referred to as Off State 10, Normal Operating State 12, and Suspend State 14. The transition between the states shown in Figure 2 are indicated by means of arrows. A computer system might have other states than those illustrated in Figure 2. In the Normal Operating State 12 a user may use applications. There is a power management driver (APM OS driver) - which is transparent to the user - in the OS which runs in the background. In addition, there are usually APM BIOS routines. Examples of the APM BIOS routines are the Suspend Routine, the Resume Routine, the Boot-Up Routine, the Supervisor Routine, the Save CPU State Routine, and the Restore CPU State Routine. In addition, there is an APM BIOS Routing Routine which essentially accepts commands from the APM OS driver and calls the appropriate APM BIOS routine. For example, if the APM OS driver issues a Suspend Command (transition 13), the APM BIOS Routing Routine calls the Suspend Routine and the computer system undergoes a transition into the Suspend State 14. In the Suspend State 14, the computer system consumes an extremely small amount of electrical power. The small use of power is accomplished by saving the state of the computer system (system state) to non-volatile memory. To enter the Suspend State 14, execution of applications is interrupted and program execution control is transferred to the power management driver. The power management driver ascertains the state of the computer system and writes the entire state to non-volatile memory. The state of CPU registers, any cache, the system RAM, and other registers and volatile memories is written to non-volatile memory. The entire state of the system is saved in a so-called hibernation image in such a way that it can be later restored. That is, the user needs not to wait for the computer system to re-boot and load an OS instance, and to load the graphical user interface as it normally would.

The basic concept of the present invention is now described in connection with Figure 3. The above-mentioned disadvantages of known computer systems are overcome by a method which
1. replaces the shut-down/re-boot operation (transitions 16 and 11 in Figure 2) by a suspend operation into Suspend State and resume operation to Normal Operating State that - in a departure from the existing art - is capable of maintaining multiple hibernation images in non-volatile memory; and, which
2. gives the user the choice to resume operation of any previously suspended OS instance (resume from the respective hibernation image ) or to boot a new instance of an OS (boot from a bootable disk partition) prior to entering or immediately before leaving the hibernation state.

In a departure from the existing art, the present scheme allows a user to switch between two or more OS instances. This is realized by means of appropriate operations in the context of transitions into and out of the hibernation state:
(1) When leaving hibernation state, the present scheme allows any one of several alternate OS instances to be booted via a normal boot procedure;
(2) When leaving hibernation state, the present scheme allows any one of several saved system states to be restored via a resume procedure;
(3) The present scheme allows a suspend operation to be performed independent of whether previously saved system states exist and leaves these system states intact;
(4) When leaving hibernation state, the present scheme offers the user a choice between a boot procedure and a resume procedure;
(5) When several alternate saved system states exist, the present scheme offers the user a choice as part of the resume procedure;
(6) When going into hibernation state under user control and when several alternate saved system states exist, the present scheme enables the user to indicate the system state to be restored and allows the suspend/resume operations to be executed in immediate succession, thus effectively performing a user directed switch between two OS instances .

The present scheme might rely on the normal boot procedure which is multi-boot capable and offers the user a choice between alternate bootable partitions should more than one exist. Please note that there is no notion of a host OS and multiple guest OSes that run on top of the host OS, as implemented in VMware which was mentioned in the introductory part of the present description. VMware does not allow the system or user to save the state of an OS instance - including the state of a processor - in a non-volatile memory for later retrieval. Furthermore, the different OSes provided by VMware are not independent OS instance because the guest OSes run on top of VMware which sits within the host OS.

According to a first embodiment of the present invention a user can decide after he pressed the power button (step 20) to power up a computer whether to go through the boot procedure (path 21, 22) to boot a first OS, or whether to dehibernate (path 23, 24) by performing a resume procedure so that a second OS instance can be used which was saved before during a hibernate process. This scheme is illustrated in Figure 3. If the user selects in step 25 the path 21, 22, then the computer boots the first OS via a boot process and goes into the normal operating state 26. If the path 23, 24 is selected, the second OS is reactivated via a resume process by restoring the respective state from the hibernation image kept in non-volatile memory. After power on, a screen may be presented to the user by means of which he can select the regular boot path 21, 22, or the dehibernate path 23, 24. If there are several hibernation images found by the computer, the user might be given even further options at step 25.

According to a second embodiment of the present invention a user can choose whether to use an existing hibernation image 36 when powering down a computer, effectively overwriting the system state kept by this image, or whether to create a new hibernation image 34, as illustrated in Figure 4. If the user initiates a power down on a running computer (box 30), a hibernate process 31 is invoked. The user then can select whether to use the existing hibernation image (path 35, 36) or whether to create a new one (path 33, 34). If he chooses an existing hibernation image that image is updated with the current system state and the computer is switched off (box 37), otherwise the system state is saved in form of a new hibernation image (path 33, 34) and the computer is switched off.

According to a third embodiment of the present invention a user can change OS instances on a running computer. This scheme is illustrated in Figure 4. Assuming the computer is in a running state (box 30 in Figure 4), the user is prompted whether he wants to save state information of the current OS into a corresponding hibernation image, or whether the state information is to be discarded and another OS instance is to be loaded by a resume process from the respective hibernation image from the non-volatile memory. Assuming that OS/2 (OS/2 is a trademark of International Business Machines Corporation) is running on the computer and the user wants to use Linux for a while, he would initiate the hibernate process. He then has to select whether to save the current state or not. If the answer is yes, then the computer saves the state information and creates an OS/2 hibernation image. Then, the user can select another hibernation image. If there is only one other hibernation image (e.g., the desired Linux hibernation image) the computer would automatically resume boot from this image and restore a previously stored Linux instance.

According to a fourth embodiment of the present invention a user can decide when triggering a computer to leave a previously entered hibernation state, whether to resume from one of several OS instances from the corresponding hibernation images that were stored some time ago. The respective OS is then restored via a resume procedure. If the user has already selected a particular hibernation image prior to entering the hibernation state, then there is no need to prompt him again when leaving the hibernation state and a resume procedure from the selected hibernation image is employed.

According to a fifth embodiment of the present invention a user can bring the computer into hibernation state in the same way as a conventional computer. The point of distinction here is that the user either selects a regular hibemate/dehibernate mode where the current OS instance is saved to a hibernation image and reloaded after a while, or a modified hibernate/dehibernate mode where the computer loads another OS instance. The regular hibernate/dehibernate mode can be used, for example, if the user leaves the computer unattended for a while to preserve energy. The modified hibernate/dehibernate mode can be used if the user decides to use another OS instance after a break If the user selects the modified hibernate/dehibernate mode, the computer either asks him to select an alternative OS instance during the hibernate process, or right after he has initiated the dehibernate process.

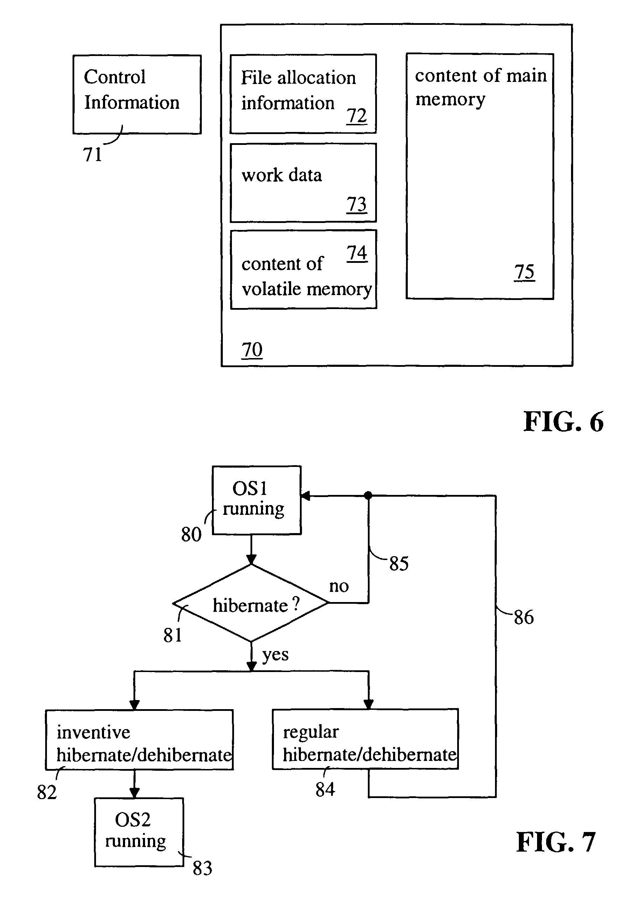

Additional aspects of the present invention are described in connection with the flowchart given in Figure 7. A computer system is assumed to run a first OS (shown as OS1), as indicated in box 80. If the user or system initiates a hibernation sequence, the user may be offered an opportunity to decide whether to go into hibernation state or whether to return to the running state (box 80) via path 85. This decision making process is indicated by reference numeral 81. If the user decides to enter the hibernation state he can chose between the regular hibernation/dehibernation mode (box 84) where the system (or part thereof) is powered down for a while and where the system during a subsequent dehibernation sequence returns to OS1 (box 80) via path 86, and the modified hibernation/dehibernation mode in accordance with the present invention (box 82) where a selection of all available hibernation files is offered to the user and he can select one. In the present example the OS2 was selected and the dehibernation sequence restores the state of OS2 (box 83). In other words, the user changed from a first OS instance (OS1) to a second OS instance (OS2) without having to shut-down and re-boot the system.

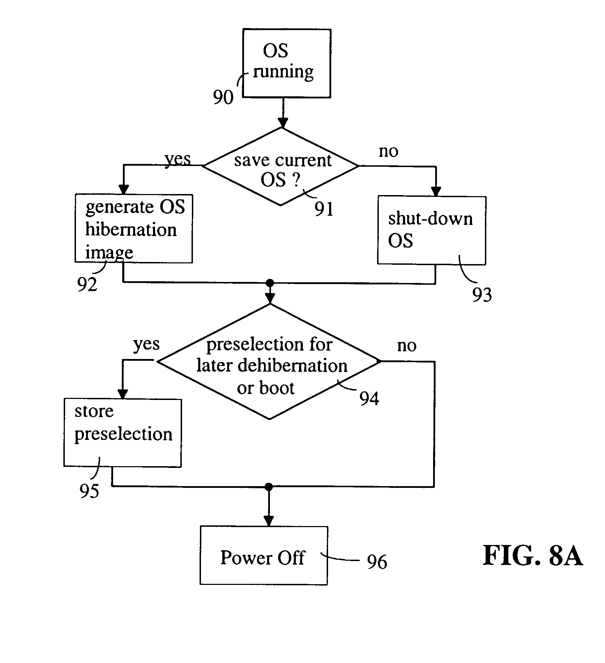

Additional aspects of the present invention are described in connection with the flowchart given in Figure 8A. As illustrated, if the computer system is running (box 90), a user can choose whether to save the current OS (decision 91). If the user decides to have the current OS saved, the system generates a corresponding OS hibernation image (box 92). Otherwise, the OS is shut-down (box 93). This sequence of steps can be followed by the preselection of an OS for later dehibernation or boot, as indicated by decision 94. The preselection sequence is optional. If the user decides to make a preselection, this preselection is stored (box 95) before the computer system is powered-off (box 96). If no preselection is made, the system is powered-off directly (box 96). Note that the power-off state at box 96 can correspond to the Off State or Suspend State of Figure 2.

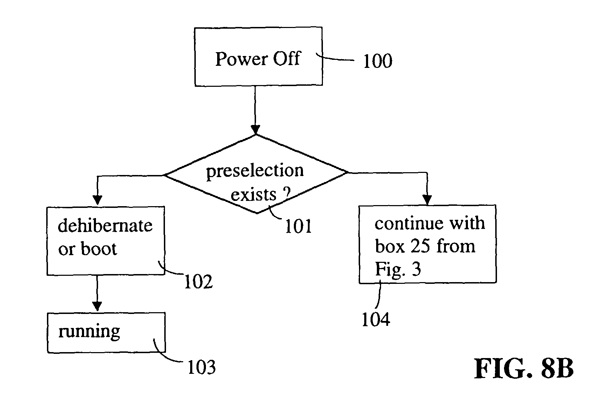

Provided that a preselection was made (see for example boxes 94 and 95 of Figure 8A), the sequence of Figure 8B can be followed upon leaving the Power Off state (box 100). First, it is checked whether a preselection already exists (decision 101). If this is the case, then the computer system dehibernates or boots using the hibernation image that was preselected (box 102) to go into the running state (box 103). If no preselection exists or was found, the computer system follows the steps starting at box 25 of Figure 3, i.e., the user can select in step 25 the path 21, 22, so that the computer system boots an OS via a boot process and goes into the normal operating state 26. If the path 23, 24 is selected by the user, another OS (or another instance of the same OS) is reactivated via a resume process by restoring the respective state from the hibernation image kept in non-volatile memory. A screen may be presented to the user by means of which he can select the regular boot path 21, 22, or the dehibernate path 23, 24. If there are several hibernation images found by the computer, the user might be given even further options at step 25.

There are many different ways to implement the present invention. It can be implemented in hardware, firmware, software, or any combination thereof. It can be implemented in the boot code and low-level input-output system code contained in ROM, in the master boot code contained in the boot medium, in the boot loader contained in the bootable partition, in the boot manager contained in the boot manager partition, in the operating system, or any combination thereof. Several examples of implementations are given below.

The present invention can be implemented by modifying the low-level input-output system code (such as the BIOS code) usually contained in ROM (and possibly shadowed to RAM). In particular, the code implementing the suspend function and the resume function can be modified such that they are able to handle the different steps required when entering hibernation state and when leaving hibernation state, in accordance with the present invention. When invoked, the resume function asserts the existence of one or multiple hibernation images and offers the user a choice comprising: (1) a selection of all available hibernation images; (2) for each hibernation image in this selection the option (2a) to resume from it or (2b) to discard and delete it; (3) the additional option to perform a boot operation that leaves the hibernation images intact. When the user decides to resume from an available hibernation image, the resume function restores the respective system state by performing a conventional resume operation. When the user decides to discard a hibernation image, the resume function ensures deletion of the image and offers the user said choice anew. When the last available hibernation image has been deleted or the user chooses to perform a boot operation, the resume function branches to the normal boot-up function. The boot-up function proceeds in the usual way, eventually passing control to the boot manager, which itself presents the user a choice of bootable OSes to boot. When invoked, the suspend function asserts the existence of one or multiple hibernation images and offers the user a choice comprising: (1) a selection of all hibernation images; (2) the option to save the current system state into a hibernation image with the option (2a) to replace an existing hibernation image from the selection or with the option (2b) to create a new hibernation image uniquely identifiable by the user in the course of a subsequent resume function execution; (3) the additional option to mark a single hibernation image from the selection to be used in the immediate execution of the resume function subsequently to the completion of this suspend function. When the user decides to replace an existing hibernation image, the suspend function saves the current system state in that hibernation image effectively replacing its present content. When the user decides instead to create a new hibernation image, the suspend function saves the current system state into a new hibernation image with a new unique identifier (possibly prompting the user for this identifier). When the user has marked a hibernation image for an immediate execution of the resume function, the suspend function as last action branches to the resume function, which then restores the system state from that hibernation image (without prompting the user anew).

Alternatively, the present invention can be implemented by modifying the boot loader (or boot manager) usually contained in a bootable partition. The boot loader is loaded as part of a regular boot procedure. Once the bootloader is loaded, it copies itself to a place in high memory and marks that memory out of the available RAM bit mask that is provided to any OS instance that gets loaded. This allows the boot loader to stay resident in the RAM. The boot loader may provide entry point addresses to the OS for the suspend function and the resume function. As first action after making itself resident in RAM, the boot loader asserts the existence of hibernation images in non-volatile memory to decide whether it should perform a boot function or a resume function. When no hibernation images are present, it branches to the boot function which offers the user a choice of bootable OSes. Upon selection of an OS it loads the respective OS and hands control over to it. If hibernation images are present, it branches to the resume function, which implements the different steps required when leaving hibernation state, in accordance with the present invention in essentially the same way as described with the alternate implementation above. In particular, after the user interaction the boot loader can proceed to restore all of RAM from the saved hibernation image. And since the image did not include boot loader itself, there is no potential for overwriting itself during the RAM restore. After all of RAM has been restored, the boot loader then restores CPU state to the same as when it was called prior to the respective suspend function execution and continues execution. This effectively causes a return to the operating system routine that branched to the suspend entry point. The OS can then resume normal operation. When the OS wants to suspend, it performs its OS-level state saving and then branches to the boot loader suspend entry point. This executes the suspend function, which implements the different steps required when entering hibernation state, in accordance with the present invention in essentially the same way as described with the alternate implementation above. In particular, after the user interaction the boot loader can copy the complete RAM image up to the starting address of itself to the non-volatile hibernation image. This allows the entire RAM image of the OS to be saved unchanged since the boot loader code resides in memory not available to the OS. Details of these normal boot and resume boot sequences are described in "Operating System and Machine Independent Hibernation", IBM Technical Disclosure Bulletin, Vol. 38, No. 5, pp. 143-144, 5-1995. This reference is incorporated in its entirety.

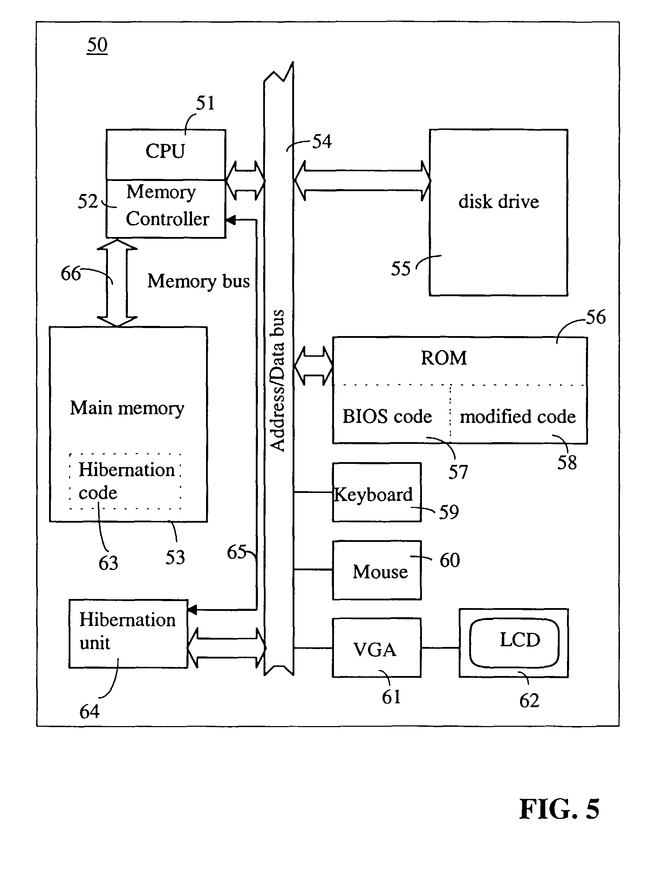

The construction of a system 50 in accordance with the present invention is addressed in connection with Figure 5. Please note that the system illustrated in Figure 5 is just one possible example. This Figure shows, in a simplified form, the structural elements of the main hardware in a notebook-type computer embodying the present invention. Reference numeral 51 designates the main CPU, for example an Intel Pentium II CPU, which incorporates a memory controller 52 (Intel and Pentium are trademarks of Intel Corporation). The CPU 51 communicates with a main memory 53 via a memory bus 66. The main memory 53 loads the BIOS, drivers, an OS, and an application program. The main memory 53 also may store code which controls aspects of the present hibernation/dehibernation scheme (this code is herein referred to as hibernation code 63 or modified code 58). The hibernation code 63 is loaded from ROM 56, where is resides as modified code 58, at the time of power-on or after a reset. The main memory 53 may comprise DRAM chips. The CPU 51 may allocate part of the main memory 53 to the hibernation code 63. The memory controller 52 may switch the communication of the CPU 51 so that the CPU 51 communicates either with the hibernation code 63 or with other information stored in the main memory 53. The CPU 51 connects with the ROM 56, a keyboard 59, a mouse 60, and an LCD display 62 via a video adapter chip 61 through an address/data bus 54. The video adapter chip 61 is a display controller so that information is displayed on the LCD display 62 in accordance with the content of a special RAM (not shown). There is usually a keyboard/mouse controller and sub-CPU situated between the keyboard 59, mouse 60 and the bus 54. This controller and the sub-CPU are not shown in Figure 5. Note that there usually are other components connected via the bus 54 to the CPU 51. The system 50 comprises a so-called hibernation unit 64 which controls aspects of the present hibernation/dehibernation scheme. This hibernation unit 64 is connected via an interruption line 65 to a pin of the CPU 51. The hibernation unit 64 monitors the system 50. When the hibernation unit 64 detects that the hibernation state is to be entered, it activates the interruption line 65. This interrupt is herein referred to as hibernation interrupt (HI). Note that this hibernation unit 64 can be implemented in software, hardware (e.g. as part of a logic chip), or as a combination of software and hardware. When the HI occurs, the memory controller 52 enables communication between the CPU 51 and the hibernation code 63 thereby initiating execution of this code 63. As mentioned above, the ROM 56 might store modified code 58 in addition to the regular BIOS code 57. The modified code 58 is loaded as hibernation code 63 from the ROM 56 to the main memory 53.

The CPU 51, or a sub-CPU (mentioned above), detects whether the system or user wants to enter the hibernation state. The entering of the inventive hibernation/dehibernation scheme can be triggered by the user pressing a hot key on the keyboard 59, for example. The regular suspend and resume functions can be invoked, for instance, if the system detects that the notebook's lid was closed. In some implementation of the present invention the hibernation unit 64 may comprise a power management handler (not shown) which powers down part of the system 50 after the system state was saved to the hibernation image in non-volatile memory (e.g. a hibernation file in the disk drive 55). This power-down cycle is not invoked if the user just wants to change from a first OS instance to a second OS instance.

The system 50 mounts a non-volatile memory (e.g. a hard disk drive 55). When the system 50 enters into hibernation state, a hibernation image for storing data is prepared on the non-volatile memory.

In addition to the above described components there are usually many other hardware and/or software elements. These elements are not shown for simplicity since computer systems and their elements are well known to those skilled in the art.

As shown in Figure 6, an embodiment of the present invention might secure a location on the non-volatile memory (e.g. disk drive 55) for a block 71 for the control information, a block 72 for the file allocation information, a block 73 for work data, a block 74 for the content of the volatile memory, and a block 75 for the content of the main memory (e.g. main memory 53). The control information is required during the normal boot process after the system 50 is powered on, or during the resume function. Such control information includes system configuration information and start addresses for blocks 72 through 74. Work data are other data required for hibernation, it comprises hardware context information and control flags. Blocks 71 - 75 may be a series of areas physically connected into one integration. The block 71 is the least required to reside in a fixed place on the non-volatile memory. The block 71 may be arranged at the head of a special cylinder (which is reserved but cannot be accessed by a user) that is the innermost part of a hard disk 55. When the hibernation image actually stores data, the start address for blocks 73 - 75 are determined. The file system of the currently used OS instance can be used to generate a hibernation image 70. For this purpose a file preparation utility (e.g. an executable program) might be used. A system according to the present invention may comprise more than one such hibernation image 70. All these hibernation images are arranged such that they can be retrieved during the resume function. The user can chose one of the hibernation images. The respective hibernation image is then located in the non-volatile memory using control information and/or file allocation information and the corresponding OS instance is reinstated on the system. Even the state of application can be reestablished.

Note that any non-volatile storage, including disk drives, can be used to which to save the system state in the course of the suspend function and from which to restore the system state in the course of the resume function.

## Claims

1. An information processing system (50) comprising a processor (51), a volatile memory (53) and a non-volatile memory (55) and supporting a function by which the state of an operating instance, including the state of said processor (51), is saved in said non-volatile memory (55) for later retrieval, whereby said function allows the state of two independent operating instance to be saved in said non-volatile memory (55) for later retrieval.

2. An information processing system (50) comprising a processor (51), a volatile memory (53) and a non-volatile memory (55) and supporting a function by which the state of an operating instance, including the state of said processor (51), is saved in said non-volatile memory (55) for later retrieval, said information processing system (50) comprising:
(a) means (64, 65, 51, 52, 66, 53, 54, 63), operative when entering a suspend state, for saving said state of said operating system in said non-volatile memory (55),
(b) means (51, 52, 66, 53, 63, 62, 59), operative when entering or leaving a suspend state, for selecting another operating system, the state of which is stored in said non-volatile memory (55), and
(c) means for reestablishing the state of said other operating system and the state of said processor (51).

3. An information processing system (50) comprising a processor (51), a volatile memory (53) and a non-volatile memory (55) and supporting a function by which the state of an operating instance, including the state of said processor (51), is saved in said non-volatile memory (55) for later retrieval, said information processing system (50) comprising, when operated, a first and a second hibernation image in said non-volatile memory, whereby said first hibernation image comprises state information required for reestablishing a first operating instance and the respective processor state, and said second hibernation image comprises state information required for reestablishing a second operating instance and the respective processor state.

4. The system according to any of the preceding claims, wherein said state is saved to a hibernation image in said non-volatile memory (55).

5. The system according to claim 1 in combination with claim 4, wherein two independent hibernation images, representing the state of said two independent operating instance and the state of said processor (51), reside in said non-volatile memory (55).

6. The system according to claim 2 in combination with claim 4, wherein said means, operative when entering a suspend state, comprise means for accessing an area in said non-volatile memory (55) where file allocation information (72) is stored, for obtaining the allocation information for said hibernation image (70), and for inputting the obtained information into a buffer in said system (50).

7. The system according to claim 6, comprising means for saving the contents of said volatile memory (53) to said hibernation image (70) by using said allocation information (72) in said buffer.

8. The system according to claim 6, comprising means for storing address information on the location in said non-volatile memory (55) where said allocation information has been saved.

9. The system according to claim 8, wherein said address information is stored into a predetermined area in said non-volatile memory (55).

10. The system according to claim 4, wherein said hibernation image (70) comprises information (71, 72) for subsequent resumption of execution of an operating system and at least one other program, such as an application program.

11. The system of claim 1, 2, or 3, wherein said non-volatile memory is a disk drive (55).

12. The system of claim 1, 2, or 3, comprising code which, when executed, controls said function.

13. The system of claim 1, 2, or 3, comprising a hibernation unit (64) which controls said function.

14. The system of claim 1, 2, or 3, comprising means (64) for triggering the state of said operating instance to be saved in said non-volatile memory (55).

15. The system of claim 1, 2, or 3 being part of a portable computer.

16. The system of claim 1, 2, or 3, wherein said state of an operating instance further comprises the state of said volatile memory, or the entire state of the computer system.

17. The system of claim 1, 2, or 3, wherein said state of said processor (51) is stored by saving the contents of the processor's registers.

18. In an information processing system (50) comprising a processor (51) coupled to a volatile memory (53) and a non-volatile memory (55) for executing at least a first operating system comprising a plurality of instructions, a method for saving state information of said first operating system (50) and processor (51) in said non-volatile memory (55) in a manner that said first operating system can be reestablished from said state information, said method comprising the steps of:
a. entering a suspend state by saving said state information in said non-volatile memory (55),
b. selecting a second operating system,
c. leaving said suspend state by reestablishing the state of said second operating system and processor (51) by retrieving the corresponding state information from said non-volatile memory (55).

19. The method of claim 18, wherein step b. is carried out while carrying out step c.

20. The method of claim 18 or 19, wherein during step a. at least part of said system (50) is powered off.

21. The method of claim 19, wherein the step of entering a hibernation state is initiable by a user of said system (50).

22. The method of claim 17, wherein said non-volatile memory is a disk drive (55).

23. The method of claim 19, wherein a user can select prior to carrying out step a. whether to save state information of said system (50) in said non-volatile memory (55).

24. The method of claim 19, wherein a user can select between a regular hibernate/dehibernate function where at least part of the system (50) is powered-down, or the function described by steps a. through c.
